# EUROPEAN PATENT APPLICATION

(11) **EP 4 032 818 A1**
(43) Date of publication of application: **27.07.2022**
(21) Application number: 20865274.3
(22) Date of filing: 08.09.2020
(51) Int. Cl.: B65B 17/02, B65D 65/46

(54) **EDIBLE CAN HOLDER WITH FLAPS**

(30) Priority: 20.09.2019 MX 2019000467 U
(71) Applicant: E6PR S.A.P.I DE C.V., 05120 Mexico City (MX)
(72) Inventor: GARCÍA CENDEJAS, Juan Francisco, Ciudad de México, 14140 (MX)
(74) Representative: Eisenführ Speiser
(86) International application number: PCT/MX2020/050032
(87) International publication number: WO 2021/054814

(57) **Abstract**

The utility model of the present invention relates to a modification to the configuration and structure of a can holder produced from a paste of biodegradable, recycled, 100% organic, compostable, edible pulp. The modification relates to a flap, protuberance, tab, tapered area or tongue having a thickness of 0.75-1.8 mm and a radius of R20 in its widest area, the modification being placed at each comer of the can holder.

## Description

### FIELD OF THE INVENTION

The present invention consists of a modification to the configuration and structure of a multi-ring can holder produced from a paste of biodegradable, recycled, 100% organic, compostable, edible pulp. In particular, the present invention, which modifies the configuration and structure of a can holder produced from a paste of biodegradable, recycled, 100% organic, compostable, edible pulp, improves its function and handling, since it facilitates its handling when distributing the can holders in the assembly area to be able to insert the cans into the can holder and it further provides a point of support to be able to release the cans from the can holder manually, avoiding destruction or damage to the can holder structure.

### BACKGROUND OF THE INVENTION

The following applications are incorporated by reference for all purposes, as if they were presented here in their entireties, as a background to the disclosure in this application; application MX/u/2019/000154 "UTILITY MODEL OF A SYSTEM FOR ASSEMBLING A MULTI-RING EDIBLE CAN HOLDER" and MX/a/2019/000557 "EDIBLE CAN HOLDER AND METHODS OF MANUFACTURING EDIBLE CAN HOLDERS".

Similarly, Mexican patent MX179288 refers to a can holder adapted to hold a number of cans, each can has an annular upper head and a generally tapered bottom to allow the cans to be collectively stacked on top of each other, the holder comprising: a generally flat holder sheet in one piece that has a plurality of can stacking members that are projected upwards therefrom to establish a corresponding plurality of can stacking platforms; and the can stacking platforms have (i) an annular cover wall that defines an annular closing channel that corresponds exactly to the top edge of a can, (ii) a central platform wall, (iii) an annular support wall biased downward and inward, integrally joining the lower wall to the cover wall and establishing an annular recessed region that joins the center platform wall, which is sized and configured to accept the tapered bottom of another can to allow it to nest with the stacking platform. This application does not mention the formation of a flap in each corner of the holder and refers to the tapered region in relation to the can, since this is directed to an advantage only in the storage of the beverage packages.

Mexican patent MX241178B refers to a can holder made of cardboard, preferably corrugated cardboard, which connects a plurality of generally cylindrical cans, which is placed in at least two rows and has a sloped top and a top seal with a protruding circular ring. The holder is produced from a flat coarse piece, which has, for each can to be connected by the holder, two recesses reciprocally opposite, essentially arched, the outer edges of which are engaged under the ring of the cans when the holder is assembled over the plurality of cans to connect the holder and the cans and form a can pack assembly. The clamping slats, adapted to be held by the fingers so that they lift and handle the can pack assembly, are centrally located in the coarse piece of the holder between the rows of cans; the invention also refers to a flat piece for a cardboard holder and a method for assembling a flat piece of cardboard. This patent refers only to the general disposition of the holder, and whose advantage at the time of its disclosure was the homology of its resistance to withstand beverage cans given the manufacturing material.

The international application WO/2003/004376 refers to a support for cardboard cans, preferably corrugated cardboard, for connecting a plurality of generally cylindrical cans, arranged in one or more rows and having a sloped top and a top seal with a circular protruding edge. The support is produced from a flat crude piece, which has, for each can that can be connected by the support, two slots essentially arched, mutually opposite, the outer edges attaching under the edge of the cans when the holder is assembled into the plurality of cans to connect the holder and the cans and form a package assembly. Essentially arched crevices comprise an arched intermediate section and arched end sections on both sides thereof, forming such an intermediate section radially within the extended arched arc end sections, so that a snap tab is formed that projects inward between the end sections. The tongue is adapted to resting and attaching under the edge to connect the holder and cans to a package assembly. The invention also refers to a blank drawing of cardboard for a can holder. This patent, while referring to a tongue, refers to the packaging and can arrangement and never mentions a modification in the release of the can with the packaging.

### BRIEF DESCRIPTION OF THE INVENTION

The utility model of the present invention refers to a modification in the configuration and structure of an edible can holder formed from a pulp of vegetable fibers in a mold having inner cavities to accommodate at least four and/or six rings for transporting beverage cans, which confers advantages in terms of its usefulness.

Pursuant to Patent Application No. MX/a/2019/000557 "EDIBLE CAN HOLDER AND METHODS FOR MANUFACTURING EDIBLE CAN HOLDER", the can holder is produced from a paste of biodegradable, recycled, 100% organic, compostable, edible pulp and, therefore, environmentally friendly.

Pursuant to MX/u/2019/000154 "UTILITY MODEL OF A SYSTEM FOR ASSEMBLING A MULTI-RING EDIBLE CAN HOLDER", a novel machine is conceived, with the specific mechanical adjustment for the installation of an edible multi-ring biodegradable can holder on the cans, to which reference is made in the patent application MX/a/2019/000557 "EDIBLE CAN HOLDERS AND METHODS FOR MANUFACTURING EDIBLE CAN HOLDERS".

The present refers to a novel structure which gives advantages in terms of its usefulness to a multi-ring can holder, which is manufactured a paste of biodegradable, recycled, 100% organic, compostable, edible pulp, consisting of four extended flaps, each configured at each corner of the can holder structure.

The modification referred to in the application for utility model of interest, based on the structure and configuration of the can holder provided for in the patent application MX/a/2019/000557 "EDIBLE CAN HOLDER AND METHODS FOR MANUFACTURING EDIBLE CAN HOLDERS" has as advantages the speeding up of the installation process of the can holder, multiple biodegradable rings on the cans and facilitating the manual removal of the can from the can holder by the consumer, without causing damage or breakage to the entire structure of the can holder and/or to the retaining rings of the can holder or compromising the holding and stable fixation of the remaining cans, allowing it to maintain its rigid structure during its lifetime and until the total of the cans it holds are manually released by consumers.

The patent application MX/a/2019/000557 "EDIBLE CAN HOLDERS AND METHODS FOR MANUFACTURING EDIBLE CAN HOLDERS" does not make specific reference to the shape of the structure or shape of the can holder, since this invention only refers to its novel composition, the result of an inventive step and its method of manufacture. The patent application referred to above, although it discloses that a rigid structure is obtained in the can holder, from a paste of biodegradable, recycled, 100% organic, compostable, edible pulp and, technically, able to hold the can inside the can holder in a safe and stable way, it was detected that, when manipulated by the user and manually releasing the cans, it could cause damage to the structure of the can holder by the users, not having a sufficiently rigid, stable point of support nor the surface required to facilitate the release of the cans without compromising the structure of the can holder.

Therefore, the present invention consists of incorporating a flap-shaped body to the structure of the can holder from a paste of biodegradable, recycled, 100% organic, compostable, edible pulp, with the surface and rigidity structurally required to function as a point of support in the can holder and facilitating the release of the cans manually, avoiding damage or breakage to the structure of the can holder.

It was also determined that having a flap with a thickness not greater than 1.2 mm in relation to the rest of the body of the can holder, whose thickness is 2.0 to 3.0 mm and the radius of the flap, wherein its radius at the widest point is R20, does not require modification of the mechanical structure of the can holder assembly machine, referred to in utility model MX/u/2019/000154 "UTILITY MODEL OF A SYSTEM FOR ASSEMBLING A MULTI-RING EDIBLE CAN HOLDER". On the contrary, the addition of the flaps at each corner of the can holder, with the surface and radius at its widest point referred to above, facilitates the way to separate each of the can holders in the distribution area so that they can be placed in a group of 4 or 6 cans, respectively, improving the time required for the distribution and assembly of each of the can holders in the assembly machine.

### BRIEF DESCRIPTION OF THE INVENTION

Systems, devices and methods provide multi-ring, edible can holders with the ability to rapidly degrade in environmental exposure and be nutritionally neutral when consumed by animals (birds or fish), allowing them to be environmentally friendly.

While the multi-ring edible can holder provided in patent application MX/a/2019/000557 "EDIBLE CAN HOLDER AND METHODS OF MANUFACTURING EDIBLE CAN HOLDERS" fulfills the function for which it was conceived, it was proved that a modification in its configuration and physical structure, through the inclusion of four flaps, each positioned in the corners of the can holder structure, would generate advantages in terms of its usefulness both in the assembly stage and placement on the cans, as well as to reinforce the durability of its structure when manipulated by the consumers, at the time of removing each fastened can and facilitating handling.

Therefore, a main object of the invention is to provide a novel arrangement in the configuration and structure of the biodegradable can holder sheet for unified transport of a group of beverage cans in a single package, wherein this new modification of the can holder stands out because it comprises in each corner a protuberance, flap, tab, tapered area or tongue having a thickness of 0.75 mm-1.8 mm, from the sheet of can holder whose thickness is 2.0-2.5 mm. This protuberance, tab, tapered area or tongue, for reference of the present invention, will be considered as a flap.

It is another object of the invention to provide a novel arrangement in the configuration and structure of the sheet of the biodegradable can holder, that allows the user/consumer to be able to release more easily and efficiently the can from the can holder without causing damage to the rigid structure of the can holder.

It is still another object of this invention to provide an attachment, whose dimensions by the design of its flaps in its structure do not alter the transport and storage capacity, allowing for horizontal and vertical stacking of the same number of can holders that derive from the patent application MX/a/2019/000557 "EDIBLE CAN HOLDERS AND METHODS FOR MANUFACTURING EDIBLE CAN HOLDERS", nor does it compromise the rigidity and stability of the can holders with the rest of the cans when a can is released.

Similarly, it is another object of the invention that the incorporation of the flaps in the structure of the can holder referred to in patent application MX/a/2019/000557 "EDIBLE CAN HOLDERS AND METHODS OF MANUFACTURING EDIBLE CAN HOLDERS" contains adequate thickness and surface so as to not require modification of the mechanical structure of the can holder assembly machine referred to in utility model MX/u/2019/000154 "UTILITY MODEL OF A SYSTEM FOR ASSEMBLING A MULTI-RING EDIBLE CAN HOLDER". On the contrary, the addition of the flaps at each corner of the can holder, with the surface and radius at its widest point, facilitates the way to separate each of the can holders in the distribution area so that they can be placed in a group of 4 or 6 cans, respectively, improving the time required for the distribution and assembly of each of the can holders in the assembly machine.

### DETAILED DESCRIPTION OF THE INVENTION

The specific structural and functional details described herein should not be construed as limiting, but simply as a basis for the claims and as a representative basis for teaching a person skilled in the art to use the innovation to the structure of the can holder (10).

Before describing the novel modifications to the structure of the can holder (10), it should be understood that the terminology used herein is intended to describe only particular embodiments and is not intended to be limiting. The terms "comprise", "comprising" or any other variation thereof are intended to cover a non-exclusive inclusion of the list of elements that make up the invention of interest. An element preceded by "comprises" shall not be interpreted as excluding the existence of additional identical elements. The terms "including" and/or "having", as used herein, are defined as comprising (i.e., open language). The terms "a" or "an", as used herein, are defined as one or more of one.

The term "plurality", as used herein, is defined as two or more than two. The term "other", as used herein, is defined as at least one more. The description may use the terms "embodiment" or "embodiments", which may refer to one or more of the same or different embodiments of the invention. The terms "flaps" may refer to "protuberances", "tab", "tapered area" or "tongue" having a thickness smaller than the rest of the body of the can holder (10), in the same way, the term "sheet" or "body of the can holder" should be understood as the body of the multi-ring edible can holder (10), which is produced from a paste of biodegradable, recycled, 100% organic, compostable, edible pulp.

The term "integral with" may be used, together with their derivatives. It should be understood that these terms are not intended to be synonymous with each other. Rather, in particular embodiments, "integral with" can be used to indicate that two or more elements are in physical contact with each other. "Coupled" can mean that two or more elements are in physical contact. However, "coupled" as used in the present invention refers to an element that derives from the very body of the main structure, such as knives integral with rollers.

The invention is manufactured from the same composition referred to in the can holder (10) described in patent application MX/a/2019/000557 "EDIBLE CAN HOLDER AND METHODS OF MANUFACTURING EDIBLE CAN HOLDERS". The sheet that serves to form the structure of the can holder (10) has been modified at its ends to put together the structure of each of the flaps.

### BRIEF DESCRIPTION OF THE DRAWINGS

The novel aspects considered characteristic of the present invention shall be particularly established in the appended claims. However, the invention itself, both by its organization and by its method of operation, together with other objects and advantages thereof, will be better understood in the following detailed description of the embodiments of the present invention when read in connection to the accompanying drawings, in which:
Figures 1A and 1B correspond to an isometric view of the six- and four-ring can holder, wherein one of the four flaps which is formed in each corner of the body thereof is highlighted.
Figure 2 corresponds to an enlarged view of one of the flaps, wherein the radius and thickness of said tapered region of the can holder is indicated.
Figure 3 corresponds to an enlarged view of one of the flaps from the body of the can holder, at a 1:.7 scale, wherein the region of the flap is formed from the body of the can holder, without being an additional structure or a structure that extends beyond the original dimensions of the can holder.

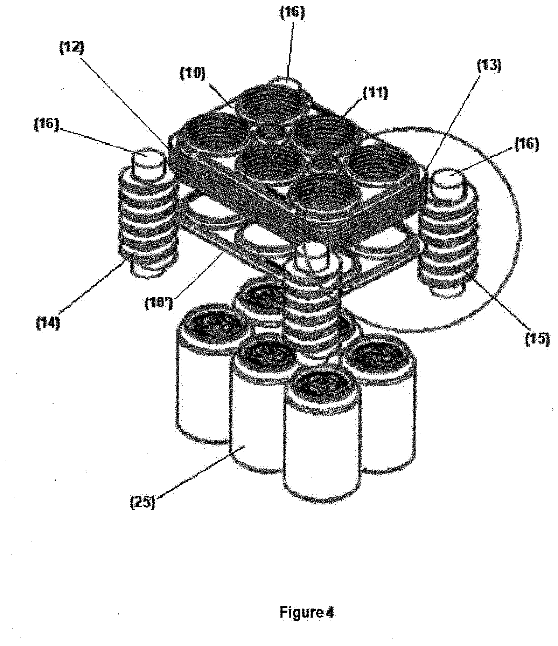

Figure 4 corresponds to a perspective view which schematizes the formation mechanism of the flaps from a can holder, having either 6 or 4 rings, which pass through the assembly machine that, in its last stage, passes through 4 rollers with knives simultaneously located on each corner of the can holder.
Figure 5 corresponds to a side view, wherein it is observed that, from a stack of can holder sheets, they are separated and one by one pass through the rollers with knives which cut each corner, forming the flaps.
Figure 6 corresponds to an enlarged perspective view of one of the four rollers, wherein it is shown how the knife contained in the roller simultaneously cut the corners of the can holder decreasing its thickness with respect to the rest of the sheet.

The advantages of providing an edible and biodegradable can holder (10), made of vegetable pulp are many, however, given its origin, consistency and structural nature, it is a rigid sheet, since the point of support for the user is, at the moment of releasing a can, the can holder (10) itself, there is the risk of bending or mistreating the rings in the proximity of the released can, so that the generation of a tab in each corner of the can holder, of a lower thickness than the rest of the body of the can holder, greatly facilitates said handling, this advantage in the arrangement of the sheet arises from the fact that such protuberances in the corners are used by the assembly machine to be able to separate the can holders (10) when they are stacked to allow them to be applied to the cans; it accelerates and facilitates the separation of the can holders (10) when they are attached as the assembly machine has different types of mechanisms that use the protuberances of the corners to pull them. These mechanisms range from low rates of 6 can holders per minute to 400 can holders per minute, depending on the required rate.

According to the present invention, the flaps formed from the body of the can holder do not significantly alter the dimensions of the original sheet; this allows the machine to assemble the sheet (10) to the cans with the same mechanism for a flap-less can holder as for the can holder with flaps, in this way, when stacking the packages, it does not require a larger surface than required for a surface required to pack 6 and/or 4 cans.

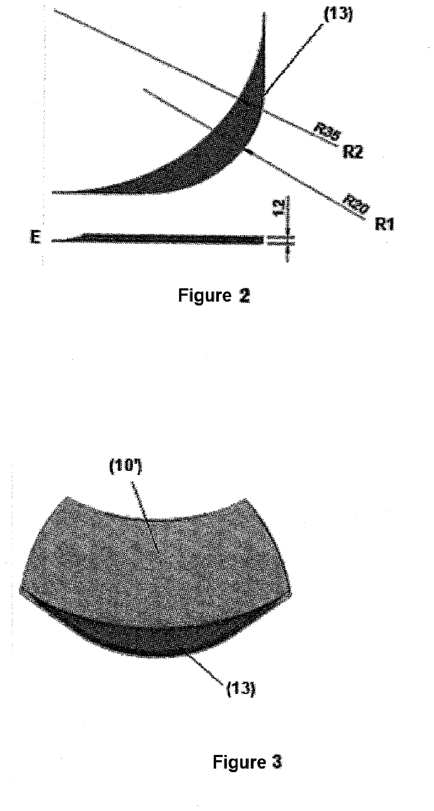

More preferably, the flaps or protuberances of the can holder do not have a thickness greater than 1.2 mm in relation to the rest of the body of the can holder, whose thickness ranges from 2.0 to 3.0 mm, and the radius of the flap ranges from R35 to R20, wherein in its widest region the radius is R20, as shown in Figure 2. This thickness and amplitude of the flap allows excellent handling when separating the can holders when they are being stacked and also allows for improved distribution of the can holders in the assembly machine, since the assembly machine finds a larger protuberance at each end, whose surface is smaller than the rest of the body of the can holder, thus allowing the rollers or intended mechanisms to separate each of the stacked bodies of the can holder, to be easily held by the rollers for removal from the stacked body of the can holder and then the can holder can be inserted into the can-body.

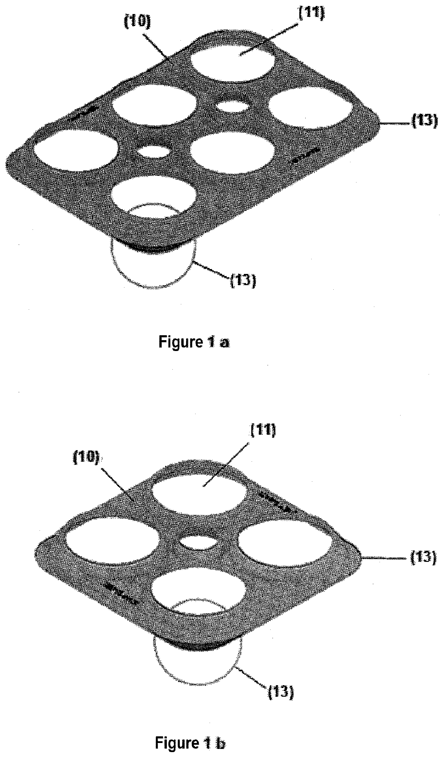

According to the present invention, the flap is not an additional element, coupled to the body of the can holder, but, instead, it is a small extension from the body of the can holder, the result of a modification to the structure of the can holder, i.e., the flaps are formed from the same edible and biodegradable material as the rest of the body of the can holder, as shown in Figure 3, which only highlights in dark the area that makes up the flap, and can be more clearly shown in Figure 1A and 1B.

The shape of the flap gives a rather oval silhouette to the final structure of the can holder, as shown in figures 1a and b, which provides practical handling and reduces the risk of damage during handling, since, in many packages of various products comprising a flap, they form a beak or corner at 90°, which, being a rigid structure, could damage proximate material or produce some damage during manipulation. Therefore, each of the flaps, having a surface lower than the rest of the body of the can holder, grants flexibility when it is used as a point of support, absorbing the torque force when the can of the can holder is removed manually.

Preferably, the formation of the flaps takes place at the moment of forming the whole structure of the body of the can holder, which, as referred to in utility model MX/u/2019/000154 "UTILITY MODEL OF A SYSTEM FOR ASSEMBLING A MULTI-RING EDIBLE CAN HOLDER", they are stacked in the assembly machine, where rollers or generally the mechanism that allows the removal of each of the stacked can holders, which is illustrated as a roller for easy reference, but is not exclusive of other removal mechanisms, uses the flaps as a clamping shaft to make it easier to release each of the can holders. This advantage is obtained when each of the flaps has a thickness lower than the thickness that comprises the rest of each of the can holders, which allows the distribution mechanism to take each of the flaps and separate it efficiently, thus avoiding that the can holders stick to one another or that two or more can holders be released together. Thus, any error in the distribution machine is avoided, as it can separate each of the stacked can holders in a constant, orderly and sequential manner.

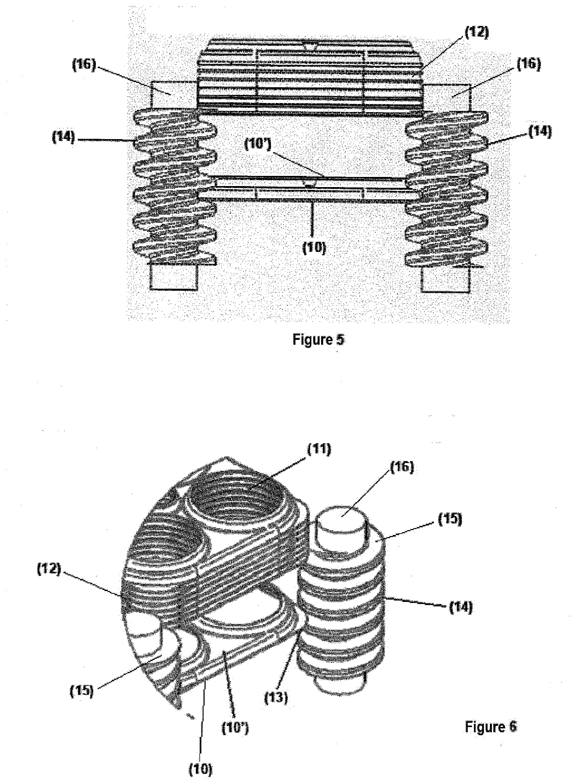

In accordance with the present invention and as observed in Figure 6, the present modification to the structure of the can holder, i.e., the addition of the flaps at each end of the can holder, allows constant, ordered and sequential separation from 6 to 400 can holders per minute.

Although the invention has been shown and described with respect to a certain preferred embodiment or embodiments, equivalent alterations and modifications are incorporated as nonlimiting embodiments to the scope of protection of this invention.

It is therefore envisaged that the claims will cover any of these modifications or embodiments that fall within the true scope of the invention.

It is noted that, as of this date, the best method known by the applicant for the implementation of the above-mentioned invention is that which is clear from the present description of the invention.

## Claims

1. A can holder produced from a paste of biodegradable, recycled, 100% organic, compostable, edible pulp, having multiple rings to pack 6 and/or 4 cans, the can holder comprising an extension, in the form of a flap, from the body of the can holder to its exterior, with a thickness lower than the rest of the body of the can holder.

2. The can holder according to claim 1, wherein the internal dimensions of the flap have a radius R20 in their widest area.

3. The can holder according to claim 1, wherein the thickness of the flap is 0.75 mm-1.8 mm, being always smaller in relation to the thickness of the rest of the body of the can holder.

4. The can holder according to claim 1, wherein the extension in form of a flap is arranged on each of the four corners of the can holder.

5. The can holder according to claim 1, wherein the extension in the form of a flap facilitates the manipulation and handling of the can holder, when manually removing each of the cans inserted therein.

6. The can holder according to claim 1, wherein the extension in the form of a flap allows the assembly machine to separate each of the can holders in a constant, orderly and sequential manner when stacked, which then allows the can holder to be inserted into the group of 4 or 6 cans.

## Amended claims

### Amended claims under Art. 19.1 PCT

1. - A can holder produced from a paste of biodegradable, recycled, 100% organic, compostable, edible pulp, having multiple rings to pack 6 and/or 4 cans, the can holder comprising an extension, in the form of a flap, from the body of the can holder to its exterior, with a thickness lower than the rest of the body of the can holder.

2. The can holder according to claim 1, wherein the internal dimensions of the flap have a radius of 20 mm in their widest area.

3. The can holder according to claim 1, wherein the thickness of the flap is 0.75 mm-1.8 mm, being always smaller in relation to the thickness of the rest of the body of the can holder.

4. The can holder according to claim 1, wherein the extension in the form of a flap is arranged on each of the four corners of the can holder.

5. The can holder according to claim 1, wherein the extension in the form of a flap facilitates the manipulation and handling of the can holder, when manually removing each of the cans inserted therein.

6. The can holder according to claim 1, wherein the extension in the form of a flap allows the assembly machine to separate each of the can holders in a constant, orderly and sequential manner when stacked, which then allows the can holder to be inserted into the group of 4 or 6 cans.
